# EUROPEAN PATENT APPLICATION

(11) **EP 4 790 506 A1**
(43) Date of publication of application: **12.08.2026**
(21) Application number: 26151404.6
(22) Date of filing: 12.01.2026
(51) Int. Cl.: G05D 1/246, G05D 1/633, G06N 3/08, B60W 60/00

(54) **METHOD AND SYSTEM FOR SAFE MOTION PLANNING IN AUTONOMOUS VEHICLES AND MOBILE ROBOTS**

(30) Priority: 05.02.2025 GB 202501632
(71) Applicant: AUMOVIO Germany GmbH, 60488 Frankfurt am Main (DE)
(72) Inventor: Derajic, Bojan, 60488 Frankfurt (DE); Bernhard, Sebastian, 60488 Frankfurt (DE)
(74) Representative: Aumovio Corporation

(57) **Abstract**

Embodiments of the present disclosure relate to methods for safe motion planning. A computer program, a computer-readable data carrier and an apparatus are also disclosed. The method for safe motion planning comprises: obtaining, by a hypernetwork, an environment representation comprising one or more signed distance fields, SDFs, obtained for respective one or more time steps of a motion planning time horizon; generating, by the hypernetwork, parameters based on the environment representation; obtaining, by a main network, a residual of a Hamilton Jacobi, HJ, value function based on the generated parameters; applying a Rectified Linear Unit, ReLU, to the residual to obtain a nonnegative residual; determining an HJ value function as a subtraction of the nonnegative residual from an SDF of the one or more SDF; and using the determined HJ value function for safe motion planning.

## Description

The present disclosure relates to motion planning in autonomous navigation. In particular, the present disclosure relates to safe motion planning using a machine learning model to approximate the Hamilton-Jacobi value function that may be used as a terminal constraint in a Model Predictive Control, MPC, and that may be used as a Control Barrier Function, CBF, in a safety filter for autonomous navigation.

Safe motion planning for autonomous vehicles and mobile robots remains a critical challenge in the automotive industry. Various approaches have been developed to address this issue, one of which is Hamilton-Jacobi (HJ) reachability analysis. This method, grounded in the dynamic programming principle, results in a value function defined over the system state space. The zero-level set of this function delineates safe and unsafe states, with all states where the function is positive being considered safe. Consequently, requiring the value function to be positive can be straightforwardly integrated as a constraint into a wide range of optimization-based motion planning approaches, such as Model Predictive Control (MPC).

Traditionally, the value function is obtained as a numerical solution to the HJ partial differential equation (PDE) or variational inequality (VI) over a discrete grid in the system state space. However, this approach faces practical difficulties, prompting many researchers to approximate the HJ value function using machine learning (ML) models.

ML approximations of the HJ value function can be achieved through supervised, self-supervised, or reinforcement learning. In supervised learning, the ground truth is calculated offline using numerical methods, and the model is trained as in a standard regression task. In self-supervised learning, ground truth data is not required; instead, the loss function is designed based on the continuous-time HJ PDE or HJ VI. Similarly, in reinforcement learning, the reward function is designed based on the discrete-time HJ PDE or HJ VI.

There are multiple problems associated with prior art solutions. One significant issue is the memory requirements, as solutions obtained using numerical solvers are defined over a discrete grid containing a large number of points, necessitating substantial memory to store the solution. Additionally, the differentiability of the value function is compromised since numerical solutions are discrete in state space, leading to approximated gradients. This is particularly disadvantageous for optimization-based motion planning approaches that rely on gradient-based algorithms, as coarse grids can introduce relevant errors in the approximated gradients.

Another challenge is the application to unknown environments. Most existing approaches, whether based on numerical solutions or ML approximations, require complete a priori knowledge of the environment in which the system will operate. This is impractical for real-world problems where the environment can change unpredictably. Similarly, the application to dynamic environments is limited, as most approaches assume static environments and cannot handle dynamic changes such as moving obstacles. This limitation is critical for ensuring safety in real-world scenarios involving pedestrians or other vehicles.

Real-time performance is another major concern. Most existing approaches are applicable only in offline regimes or to very slow systems, whereas real-world applications like robotics and autonomous driving demand true real-time performance. Furthermore, ML-based approximations do not provide guarantees regarding the approximation error, which can degrade the safety properties of the overall motion planning system. Determining the range of approximation errors for ML models is challenging and requires significant effort, especially for safety-critical applications.

This invention aims to provide a robust and efficient method and system for safe motion planning by leveraging Hamilton-Jacobi reachability analysis while addressing the limitations of prior art solutions. The proposed solution ensures safety in complex and dynamic environments, making it suitable for real-world applications in autonomous driving and robotic. This proposed solution is enclosed by the subject-matter of the appended independent claims. The appended dependent claims address optional embodiments of the present disclosure.

According to an aspect of the present disclosure, there is provided a method for safe motion planning comprising: obtaining, by a hypernetwork, an environment representation comprising one or more signed distance fields, SDFs, obtained for respective one or more time steps of a motion planning time horizon; generating, by the hypernetwork, parameters based on the environment representation; obtaining, by a main network, a residual of a Hamilton Jacobi, HJ, value function based on the generated parameters; applying a Rectified Linear Unit, ReLU, to the residual to obtain a nonnegative residual; determining an HJ value function as a subtraction of the nonnegative residual from an SDF of the one or more SDF; and using the determined HJ value function for safe motion planning.

Obtaining an environment representation comprising one or more signed distance fields (SDFs) for respective time steps of a motion planning time horizon allows the autonomous system using said method for safe motion planning to capture a dynamic and comprehensive view of the environment. This step ensures that the autonomous system has up-to-date information about the positions of obstacles and other relevant features, which is crucial for accurate motion planning.

Generating parameters by the hypernetwork based on the environment representation enables the autonomous system to dynamically adjust its internal model to the current state of the environment. This adaptability ensures that the subsequent computations are relevant and accurate, improving the system's ability to respond to changes in real-time.

Obtaining a residual of the Hamilton-Jacobi (HJ) value function by the main network based on the generated parameters refines the signed distance field (SDF) to better represent the safety constraints of the environment. This step allows the autonomous system to account for dynamic changes and uncertainties, enhancing the accuracy of the safety constraints.

Applying a Rectified Linear Unit (ReLU) to the residual to obtain a nonnegative residual ensures that the residual does not introduce any negative values, which could compromise the safety constraints. This step maintains the integrity of the safety constraints by ensuring that the residual only refines the SDF in a way that preserves safety.

Determining the HJ value function as a subtraction of the nonnegative residual from an SDF ensures that the HJ value function is always less than or equal to the SDF, maintaining the safety properties of the autonomous system. This step provides a robust and accurate measure of the safe and unsafe states in the environment, which is critical for safe motion planning.

Using the determined HJ value function for safe motion planning ensures that the planned trajectory remains within safe bounds, avoiding collisions and other unsafe behaviors. This comprehensive approach enhances the reliability and safety of autonomous systems operating in dynamic and complex environments.

In embodiments, determining the HJ value function as a subtraction of the nonnegative residual from an SDF of the one or more SDF, and using the determined HJ value function for motion planning comprise: determining an HJ value function as a subtraction of the nonnegative residual from an SDF, of the one or more SDF, obtained for a future time step subsequent to a current time step, and using the HJ value function as a terminal constraint in a Model Predictive Control, MPC, for safe motion planning; and/or determining an HJ value function as a subtraction of the nonnegative residual from an SDF, of the one or more SDF, obtained for the current time step, and using the HJ value function as a Control Barrier Function, CBF, in a safety filter for safe motion planning.

Determining an HJ value function as a subtraction of the nonnegative residual from an SDF obtained for a future time step (e.g. last time step in the time horizon of the motion planner) and using the HJ value function as a terminal constraint in a MPC framework for safe motion planning has several technical effects. This approach ensures that the planned trajectory of the autonomous system remains within safe bounds by considering future states of the environment. By incorporating the HJ value function as a terminal constraint, the MPC framework can anticipate and mitigate potential risks, leading to more proactive and robust safety measures. This enhances the system's ability to navigate dynamic environments safely, as it accounts for predicted changes and ensures that the terminal state lies within the safe set defined by the HJ value function.

On the other hand, determining an HJ value function as a subtraction of the nonnegative residual from an SDF obtained for the current time step and using the HJ value function as a CBF in a safety filter for safe motion planning also has significant technical effects. This method ensures real-time safety by continuously monitoring and adjusting the control inputs to keep the system within the safe set defined by the HJ value function. The safety filter modifies potentially unsafe control inputs proposed by the performance controller, projecting them onto the space of safe actions. This real-time adjustment ensures that the system's state remains within safe bounds, preventing collisions and other unsafe behaviors. This approach is particularly effective in dynamic and uncertain environments, where immediate responses to changes are crucial for maintaining safety.

When both conditions are met (determining an HJ value function as a subtraction of the nonnegative residual from an SDF, of the one or more SDF, obtained for a future time step, and using the HJ value function as a terminal constraint in a Model Predictive Control, MPC, for safe motion planning; AND determining an HJ value function as a subtraction of the nonnegative residual from an SDF, of the one or more SDF, obtained for the current time step, and using the HJ value function as a Control Barrier Function, CBF, in a safety filter for safe motion planning), the system benefits from the combined technical effects of proactive and real-time safety measures. By using the HJ value function as a terminal constraint in MPC, the system can plan safe trajectories over a longer time horizon, anticipating future risks and adjusting the plan accordingly. Simultaneously, using the HJ value function as a CBF in a safety filter ensures that any immediate control inputs remain within safe bounds, providing an additional layer of safety. This dual approach enhances the overall robustness and reliability of the motion planning system, ensuring safe navigation in both the short and long term.

In embodiments, the future time step is the last time step in a motion planning time horizon of the Model Predictive Control, MPC. In embodiments, the one or more SDFs are derived from respective one or more occupancy grid maps, OGMs, obtained for the respective one or more time steps.

Considering an autonomous vehicle navigating through a busy urban environment. The vehicle's sensors continuously collect data about the surroundings, including the positions of pedestrians, other vehicles, and static obstacles. This data may be processed to create occupancy grid maps (OGMs), which are then converted into signed distance fields (SDFs) representing the distance from each point in the environment to the nearest obstacle. These SDFs are obtained for multiple time steps within the motion planning time horizon, providing a dynamic representation of the environment.

The hypernetwork takes these SDFs as input and generates parameters, such as weights and biases, for the main network. These parameters are tailored to the current state of the environment, allowing the main network to adapt to changes in real-time. The technical effect of this step is that it enables the system to dynamically adjust its internal model based on the latest environmental data, ensuring that the subsequent computations are relevant and accurate.

In embodiments, the environment representation may comprise more than one SDFs, one SDF may be obtained for the current time step, and the remaining SDFs may be obtained for at least one of N previous time steps before the current time step, and/or for at least one of N subsequent times steps after the current time step, where N is an integer.

In embodiment, the hypernetwork or the main network may be a machine learning model (e.g. artificial neural network).

In embodiments, using the HJ value function as a terminal constraint in the MPC may comprise ensuring that the terminal state of the MPC optimization problem satisfies the HJ value function, thereby constraining the terminal state to lie within the safe set defined by the value function, wherein the environment representation comprises at least one SDF obtained for time steps subsequent to a current time step.

In embodiments, using the HJ value function as CBF in a safety filter may comprise modifying control inputs proposed by a performance controller to ensure they remain within a safe set defined by the HJ value function, wherein the safe set may be the set of states for which the HJ value function is non-negative.

In embodiments, using the HJ value function as a CBF in a safety filter may further comprise projecting potentially unsafe control inputs onto the space of safe actions, thereby maintaining the safety constraints defined by the HJ value function.

For example, safe actions may be defined as control inputs that ensure the system's state remains within the safe set, thereby maintaining the safety constraints defined by the HJ value function.

According to another aspect of the present invention, there is provided a computer program comprising instructions which, when the computer program is executed by a computer, cause the computer to carry out any one of the methods discussed above.

According to a further aspect of the invention, there is provided a computer-readable data carrier having stored thereon the computer program mentioned above.

According to a further aspect of the invention, there is provided an apparatus comprising: one or more interfaces for communication; a memory; and a data processing circuit configured to carry out any one of the methods discussed above.

Examples will now be further described with reference to the figures in which:
Fig. 1 shows a flow diagram illustrating a computer-implemented method 100 for safe motion planning using the HJ function value function.
Fig. 2 shows a schematic illustrating the steps of computing the HJ value function according to method 100.
Fig. 3 schematically illustrates a block diagram of an embodiment using the HJ value function as a terminal constraint in model predictive control (MPC).
Fig. 4 shows a block diagram of an embodiment using the HJ value function within a safety filter as a control barrier function (CBF).
Fig. 5 schematically illustrates a block diagram of an embodiment of an apparatus to execute the methods described herein.

### Detailed Description

According to the present disclosure, a machine learning (ML) model may be used to approximate the Hamilton-Jacobi (HJ) value function, thereby avoiding the high memory requirements needed to store discretized solutions as in the case of numerical solvers. It may be necessary to store only the parameters of the ML model, which is much more efficient.

To achieve real-time performance and applicability to unknown environments, a model architecture may be used divided into two parts: the hypernetwork and the main network. The hypernetwork may take as input the environment representation and outputs the parameters (weights and/or biases) of the main network. The environment representation may be in the form of the signed distance field (SDF), which can be obtained efficiently from the occupancy grid map (OGM) using standard algorithms. The main network, in contrast to previous approaches, may then be used to approximate the residual of the value function with respect to the SDF. Specifically, the predicted value function V(x(k) at time step k may be equal to the sum of the SDF at time k and the residual obtained at the output of the main network. This differs from other methods as the input to the hypernetwork is now fed through and added to the output of the main network.

To achieve applicability in dynamic environments, such as those with dynamic obstacles like vehicles or pedestrians, the hypernetwork may take as input a sequence of environment representations rather than a single sample. In this disclosure, this sequence may consist of SDFs that may be calculated from the corresponding sequence of OGMs. One can differentiate between two possible sequences: i) a sequence of observed OGMs (history) during the last N steps, where the hypernetwork implicitly learns to consider the evolution of the dynamic environment into the future and generates the residual at the current time, and ii) a sequence of predicted OGMs during the future N steps from an external model, where the hypernetwork predicts the residual at the current step based on this prediction. This approach allows for ease of integration into a traditional autonomy stack where prediction models might already be in use. The predicted OGMs can be obtained by superimposing an OGM for the static environment with predictions from classical prediction models.

Compared to other ML-based approximations of the HJ value function, the method disclosed herein provides a safety guarantee achieved through the construction of the architecture. From the HJ variational inequality, one observes that the HJ value function at any point in state space must be less than or equal to the corresponding SDF. This allows us to express the value function as the sum of the SDF and a residual, V(x) = SDF(x) + R(x), where the residual R(x) is always nonpositive. By applying a ReLU activation function at the output of the main network and subtracting the result from the current SDF, one obtains an approximation of the value function that is always less than or equal to the SDF at that time step. This ensures that the learning-based component of the system cannot degrade existing safety but is optimized to improve it. This safety guarantee cannot be provided by other methods.

The proposed ML model can be trained in a supervised fashion, where the ground truth data is generated using a numerical solver, or in a self-supervised fashion. The ground truth data can be obtained for multiple consecutive time steps, requiring a dataset with sequences of sufficient length. The proposed architecture for HJ value function approximation is further explained in the figures below.

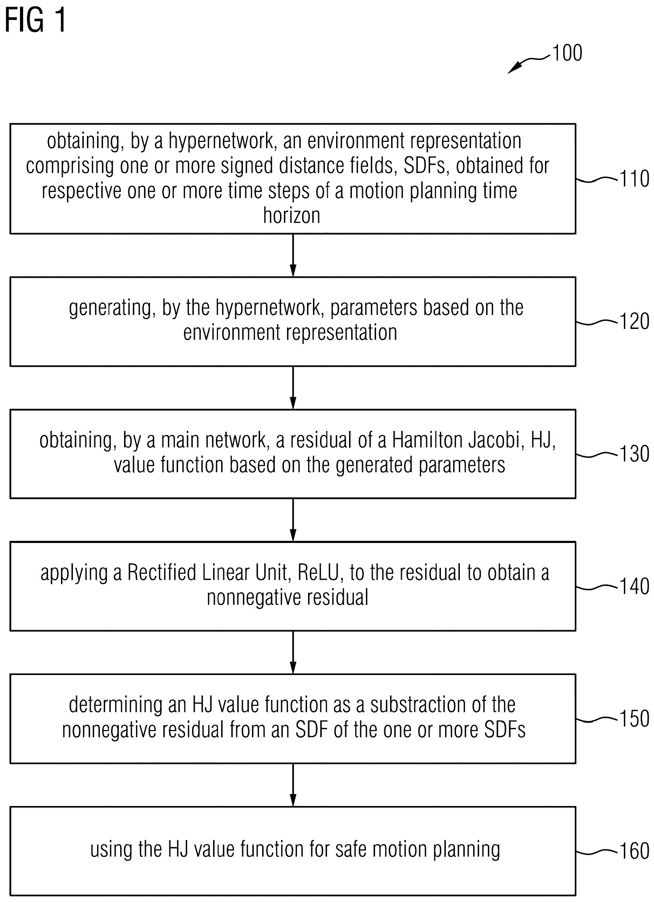

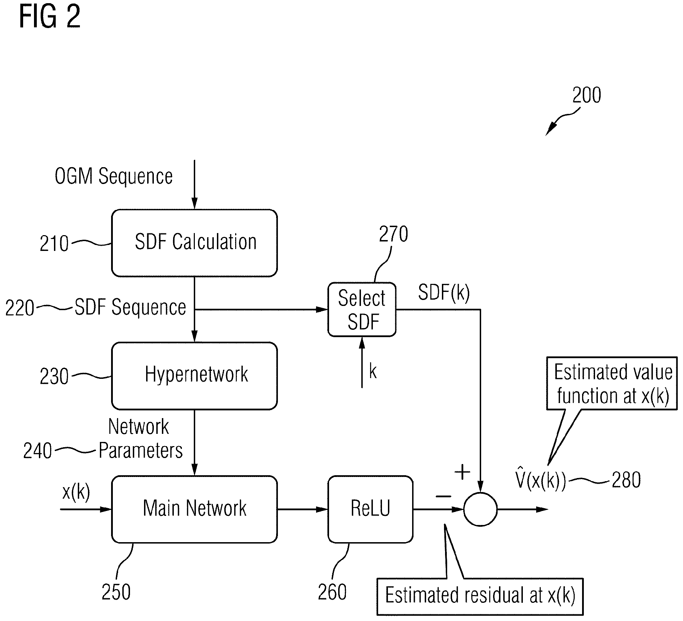

Fig. 1 shows a flow diagram illustrating a computer-implemented method 100 for safe motion planning using the HJ function value function. Fig. 2 shows a schematic illustrating the steps of computing the HJ value function according to method 100.

Step 110 of method 100 comprises obtaining, by a hypernetwork 230, 330, 430, an environment representation comprising one or more signed distance fields, SDFs 220, 320, 420 obtained for respective one or more time steps of a motion planning time horizon,

In embodiments, the hypernetwork may be a neural network that generates the parameters (weights and/or biases) for another neural network, referred to as the main network. In this context, the hypernetwork may take as input an environment representation and may output the parameters that the main network uses to approximate the residual of the Hamilton-Jacobi (HJ) value function.

In embodiments, the environment representation may be a structured form of data that describes the state of the environment in which the autonomous vehicle or mobile robot operates. In this disclosure, the environment representation may comprise one or more signed distance fields (SDFs), which may provide a measure of the distance from any point in the environment to the nearest obstacle.

In embodiments, the SDFs are scalar fields that represent the distance from each point in the environment to the nearest obstacle. The distance is signed, meaning it is positive if the point is outside the obstacle and negative if the point is inside the obstacle. SDFs may be used to provide a continuous representation of the environment that can be efficiently processed by neural networks.

In embodiments, the time steps refer to discrete intervals of time at which the state of the environment is sampled or predicted. In the context of motion planning, time steps are used to represent the evolution of the environment over time, allowing the planning algorithm to account for changes and dynamics in the environment.

The time horizon of motion planning may be the total duration over which the motion planning algorithm considers the future states of the environment and the vehicle or robot. The time horizon of motion planning may be divided into multiple time steps, each representing a specific point in time within the planning horizon. The time horizon allows the planning algorithm to anticipate future events and make informed decisions to ensure safe and efficient navigation.

In summary, the environment representation in this disclosure may comprise one or more signed distance fields (SDFs) obtained for respective one or more time steps of a motion planning time horizon. The hypernetwork may use this environment representation to generate parameters for the main network, which may then approximate the residual of the HJ value function for safe motion planning.

In embodiments, the one or more SDFs are derived from respective one or more occupancy grid maps, OGMs, obtained for the respective at least one time steps.

In embodiments of the invention, the one or more signed distance fields (SDFs) are derived from respective one or more occupancy grid maps (OGMs) obtained for the respective at least one time step. This process begins with the use of OGMs, which are grid-based maps commonly employed in robotics and autonomous systems to represent the environment. Each cell in an OGM corresponds to a specific area and contains a value indicating the probability of that area being occupied by an obstacle. These maps are typically generated using sensor data such as lidar, radar, or cameras.

For example, to derive SDFs from OGMs, the OGM may first be converted into a continuous representation. This may involve interpreting the occupancy probabilities in the OGM to determine the presence of obstacles. For each point in the environment, the distance to the nearest obstacle may be calculated, resulting in a signed distance that is positive if the point is outside the obstacle and negative if the point is inside the obstacle. These calculated distances form the SDF, providing a continuous measure of distance to the nearest obstacle for every point in the environment.

This process of deriving SDFs from OGMs may be repeated for each time step in the motion planning time horizon. For each discrete time step, an OGM is obtained, either from sensor data or predictions, and an SDF is derived from it. The sequence of SDFs thus represents the evolution of the environment in real-time over time.

The derived SDFs may then be used as the environment representation in the motion planning algorithm. The hypernetwork takes these SDFs as input to generate the parameters for the main network, which subsequently approximates the residual of the Hamilton-Jacobi (HJ) value function. This integration allows the motion planning algorithm to account for the dynamic nature of the environment in real-time, ensuring safe and efficient navigation.

By converting OGMs into SDFs for each time step, the invention leverages the detailed and probabilistic information provided by OGMs while transforming it into a continuous and more easily processed form. This approach enhances the motion planning algorithm's ability to handle complex and dynamic environments, thereby ensuring safety and efficiency in autonomous navigation.

Step 120 of method 100 comprises generating, by the hypernetwork, parameters 240, 240, 540 based on the environment representation, said parameters comprising weights.

In the context of the disclosure, the hypernetwork plays a role in generating parameters based on the environment representation. These parameters, which may include weights and biases, are helpful for the functioning of the main network. The process may begin with the hypernetwork receiving an environment representation, which consists of one or more signed distance fields (SDFs) that describe the state of the environment at various time steps.

The hypernetwork processes this environment representation to produce a set of parameters. These parameters may comprise weights and biases. Said parameters may be used by the main network to approximate the residual of the Hamilton-Jacobi (HJ) value function. Weights and biases are fundamental components of neural networks, as they determine how input data is transformed through the network to produce the desired output.

By generating these parameters dynamically (e.g. in real-time) based on the current state of the environment, the hypernetwork enables the main network to adapt to changes in the environment in real-time. This adaptability is helpful for safe motion planning, as it allows the system to respond to dynamic obstacles and other changes in the environment effectively. The hypernetwork's ability to produce appropriate weights and biases ensures that the main network can accurately approximate the HJ value function, which is used to determine safe and unsafe states for the autonomous vehicle or robot.

Overall, the generation of parameters by the hypernetwork based on the environment representation enables real-time adaptability and enhancing the safety and efficiency of motion planning in dynamic environments.

Step 130 of method 100 comprises obtaining, by a main network 250, a residual of a Hamilton Jacobi, HJ, value function based on the generated parameters.

In embodiments, the hypernetwork may be a neural network that generates the parameters (weights and biases) for another neural network, known as the main network. The hypernetwork takes as input an environment representation, such as signed distance fields (SDFs), and outputs the parameters that the main network uses to perform its computations. For example, in an autonomous vehicle navigating a dynamic environment, the hypernetwork processes the SDFs to generate the weights and biases for the main network. The main network then uses these parameters, along with the current state of the vehicle, to approximate the residual of the Hamilton-Jacobi (HJ) value function. This residual helps refine the SDFs to accurately represent the HJ value function, ensuring safe motion planning. An example of the main network could be a deep neural network with multiple layers that processes the vehicle's state and the generated parameters to produce the residual value.

The main network may be a machine learning model or a neural network that utilizes the parameters (weights and biases) generated by the hypernetwork to perform its computations. In the context of this disclosure, the main network's role may be to approximate the residual of the Hamilton-Jacobi (HJ) value function. The main network processes the environment representation, which includes the signed distance fields (SDFs), using the parameters provided by the hypernetwork. Typically, the architecture of the main network consists of multiple layers of neurons, where each layer applies a linear transformation followed by a non-linear activation function to the input data.

The residual HJ function value represents the difference between the actual HJ value function and the SDF. Mathematically, if V(x) is the HJ value function and SDF(x) is the signed distance field, the residual R(x) may be given by: R(x) = V(x) - SDF}(x). The residual captures the additional information needed to refine the SDF to accurately represent the HJ value function. In this disclosure, the main network is responsible for approximating this residual value. The residual allows the system to account for dynamic changes in the environment and ensure that the HJ value function accurately reflects the current state of the environment.

For example, consider an autonomous vehicle navigating a dynamic environment with moving obstacles. The environment representation includes SDFs that describe the distance to the nearest obstacles at various time steps. The hypernetwork processes this representation and generates the parameters for the main network. The main network then uses these parameters to compute the residual of the HJ value function, which captures the additional information needed to refine the SDFs. By obtaining this residual, the system can accurately determine the safe and unsafe states for the vehicle, ensuring safe motion planning.

In summary, the main network uses the parameters generated by the hypernetwork to approximate the residual of the HJ value function. This residual may be used for refining the SDFs and accurately representing the HJ value function, enabling safe and efficient motion planning in dynamic environments.

In embodiments, the main network may take as input the parameters of the hypernetwork and/or an input representing the state of the system at time t. The state x(t) typically includes all the relevant variables that describe the current condition of the autonomous vehicle or mobile robot and its environment. These variables can include the position, velocity, orientation, and other dynamic properties of the vehicle or robot, as well as information about the surrounding environment, such as the locations of obstacles.

For example, in the case of an autonomous vehicle, x(t) might include the vehicle's current position and velocity, the positions of nearby obstacles, and any other relevant sensor data that describes the environment at that specific time step. This state information is useful for the main network to accurately approximate the residual of the HJ value function, as it provides the necessary context for understanding the current and future safety of the vehicle's planned trajectory.

By using x(t) as an input, the main network can process the current state of the system along with the parameters (weights and biases) generated by the hypernetwork to produce the residual R(x). This residual may then be used to refine the signed distance field (SDF) and accurately represent the HJ value function, ensuring safe motion planning in dynamic environments.

Step 140 of method 100 comprises applying a Rectified Linear Unit, ReLU (260), to the residual to obtain a nonnegative residual.

The ReLU function is an activation function in neural networks, defined as ReLU(x) = max(0, x). In the context of the disclosure, after the main network computes the residual of the HJ value function, this residual may contain both positive and negative values. However, to ensure the safety guarantees of the system, it is helpful that the residual remains nonnegative. By applying the ReLU function to the residual, one can effectively set all negative values to zero, ensuring that the residual is nonnegative.

In embodiments, the HJ value function may be less than or equal to the corresponding SDF to maintain safety. By ensuring that the residual is nonnegative, one guarantees that the approximated HJ value function will always be less than or equal to the SDF, thereby preserving the safety properties of the system.

In summary, applying the ReLU function to the residual ensures that the residual is nonnegative, which is helpful for maintaining the safety guarantees of the motion planning system. This step helps to refine the SDF accurately and ensures that the HJ value function remains within safe bounds.

Step 150 of method 100 comprises determining an HJ value function 280, 380, 480 as a subtraction of the nonnegative residual from an SDF of the one or more SDFs.

This subtraction ensures that the HJ value function is always less than or equal to the SDF, maintaining the safety properties of the system. The SDF provides a measure of the distance to the nearest obstacle, and by subtracting the nonnegative residual, one refines this measure to account for dynamic changes in the environment. The resulting HJ value function accurately delineates safe and unsafe states, with positive values indicating safe states and negative values indicating unsafe states.

By determining the HJ value function in this manner, one ensures that the safety constraints are robustly enforced. This approach allows the motion planning algorithm to make informed decisions based on the current and predicted states of the environment, ensuring safe navigation even in dynamic and uncertain conditions. The subtraction of the nonnegative residual from the SDF is helpful in achieving this level of safety and reliability in autonomous systems.

Step 160 of method 100 comprises using the HJ value function for safe motion planning.

For instance, the HJ value function may be used as a terminal constraint in a Model Predictive Control, MPC, for safe motion planning, and/or said HJ value function may be used as a control barrier function, CBF, in a safety filter for safe motion planning.

In embodiments, determining the HJ value function as a subtraction of the nonnegative residual from an SDF of the one or more SDF, and using the determined HJ value function for motion planning may comprise: determining the HJ value function as a subtraction of the nonnegative residual from a predicted SDF obtained for a future time step subsequent to a current time step, and using the HJ value function as a terminal constraint in a Model Predictive Control (MPC) for safe motion planning. This ensures the safety of the autonomous system.

For instance, in an MPC framework, the motion planning problem may be formulated as an optimization problem that predicts the future states of the system over a finite time horizon. The goal is to find a sequence of control inputs that minimize a cost function while satisfying various constraints. One of these constraints is the terminal constraint, which ensures that the final state of the system at the end of the time horizon lies within a safe set.

The HJ value function, which delineates safe and unsafe states, is used as this terminal constraint. For instance, to determine the HJ value function, the system may first predict the SDF for a future time step within the planning horizon. This prediction can be based on the current state of the environment and any expected changes. The main network may then compute the residual of the HJ value function, and the ReLU activation function may be applied to ensure the residual is nonnegative.

The HJ value function V(x) may then determined by subtracting the nonnegative residual R(x) from the predicted SDF(x): V(x) = SDF(x) - R(x). This HJ value function is used as the terminal constraint in the MPC optimization problem. Specifically, the terminal state of the system at the end of the planning horizon must satisfy the condition that the HJ value function is nonnegative, ensuring that the terminal state lies within the safe set defined by the value function.

By incorporating the HJ value function as a terminal constraint, the MPC framework ensures that the planned trajectory not only optimizes the cost function but also adheres to safety requirements. This approach allows the system to account for dynamic changes in the environment and make informed decisions that prioritize safety, even in the presence of uncertainties and moving obstacles.

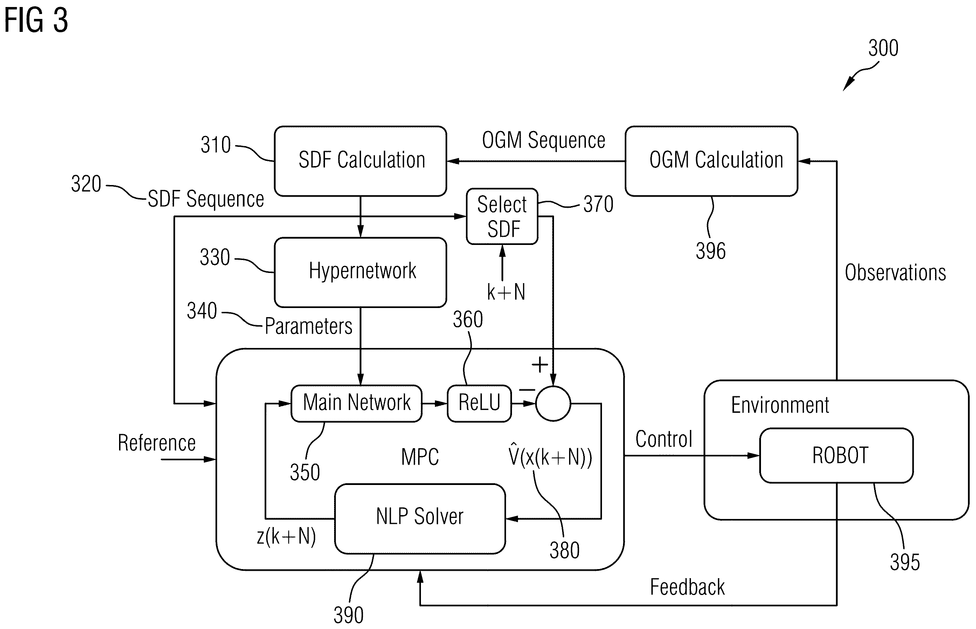

In embodiments, in the context of using the HJ value function as a terminal constraint in Model Predictive Control (MPC), the system may involve several interconnected components that work together to ensure safe motion planning as illustrated in Fig. 3. Fig. 3 schematically illustrates a block diagram of an embodiment using the HJ value function as a terminal constraint in MPC. The robot 395 or autonomous system navigates in a dynamic environment, continuously collecting data about its surroundings. This data includes information about the current state of the environment, such as the positions of obstacles, the robot's own position, velocity, and other relevant state variables.

The Occupancy Grid Map (OGM) calculation unit 396, 496, is a component in the system that processes data from the environment and the robot's states to generate sequences of Signed Distance Fields (SDFs). The environment data includes information about the positions and shapes of obstacles, while the robot's states encompass its current position, velocity, orientation, and other relevant dynamic properties.

The OGM calculation unit 396, 496 first constructs an occupancy grid map, which is a grid-based representation of the environment. Each cell in the grid indicates the probability of that area being occupied by an obstacle, based on sensor data such as lidar, radar, or cameras. This map provides a detailed and probabilistic view of the environment.

Once the OGM is constructed, the unit converts this discrete grid into a continuous representation by calculating the signed distance for each point in the environment. The signed distance is positive if the point is outside an obstacle and negative if it is inside an obstacle. This process results in the generation of an SDF, which provides a continuous measure of the distance to the nearest obstacle for every point in the environment.

The OGM calculation unit repeats this process for multiple time steps, creating a sequence of SDFs that represent the evolution of the environment over time. These SDF sequences may then used as input for the hypernetwork and/or main network, enabling the system to make informed and safe motion planning decisions based on both current and predicted states of the environment. This approach ensures that the robot can navigate safely and efficiently, even in dynamic and uncertain conditions.

The MPC framework may be formulated as a nonlinear programming (NLP) problem, and the NLP solver 390 may be responsible for solving this optimization problem. The solver finds the optimal sequence of control inputs that minimize a cost function while satisfying various constraints, including the terminal constraint defined by the HJ value function. The HJ value function, which delineates safe and unsafe states, may be determined by subtracting the nonnegative residual from a predicted signed distance field (SDF) obtained for a future time step. This function ensures that the terminal state of the system at the end of the planning horizon lies within the safe set.

The NLP solver 390 may receive at least one of the inputs: the current state (feedback) of the robot or autonomous system, the environment representation (including the predicted SDFs for future time steps), and the HJ value function as the terminal constraint. The solver processes these inputs and computes the optimal sequence of control inputs that satisfy the constraints and minimize the cost function. The output of the NLP solver may include the optimal control inputs and the predicted future states of the system.

The main network then receives the output of the NLP solver, specifically the predicted future states of the system. Additionally, the main network receives the parameters (weights and biases) generated by the hypernetwork based on the environment representation. Using these inputs, the main network approximates the residual of the HJ value function. This approximated residual is used to refine the SDFs, ensuring that the HJ value function accurately represents the safety constraints.

The refined HJ value function is then used to update the terminal constraint in the MPC framework. The optimal control inputs computed by the NLP solver are executed by the robot or autonomous system, guiding it safely through the environment. By integrating the HJ value function as a terminal constraint in the MPC framework and using the NLP solver to compute optimal control inputs, the system ensures that the robot or autonomous system navigates safely in dynamic environments. The main network's role in approximating the residual of the HJ value function is helpful for maintaining accurate safety constraints and enabling real-time adaptability.

In embodiments, said HJ value function may be used as a terminal constraint in a model predictive control (MPC). Since the HJ value function describes the maximal safe set (viability kernel), using it as a terminal constraint can theoretically achieve the recursive feasibility of the MPC. In this case, the SDF sequence should correspond to the future time steps.

In embodiments, determining the HJ value function as a subtraction of the nonnegative residual from an SDF of the one or more SDF, and using the determined HJ value function for motion planning may comprise: determining (160) an HJ value function (280) as a subtraction of the nonnegative residual from an SDF, of the one or more SDF, obtained for the current time step, and using (170) the HJ value function as a Control Barrier Function, CBF, in a safety filter (485) for safe motion planning.

In embodiments, the HJ value function may be determined as a subtraction of the nonnegative residual from a current SDF obtained for a current time step (e.g. covering all robotics applications).

Using the HJ value function as a Control Barrier Function (CBF) in a safety filter (485) for safe motion planning is helpful to ensure the safety of autonomous systems across various robotics applications. This approach leverages the HJ value function to enforce safety constraints dynamically, ensuring that the system operates within safe bounds at all times.

In this context, the HJ value function is determined by subtracting the nonnegative residual from a current signed distance field (SDF) obtained for the current time step. The process begins with the main network computing the residual of the HJ value function based on the current state of the environment. The ReLU activation function is then applied to ensure that the residual is nonnegative.

The HJ value function may then be used as a Control Barrier Function (CBF) within a safety filter 485. The safety filter may modify the control inputs proposed by a performance controller 490 to ensure they remain within the safe set defined by the HJ value function. Specifically, the safety filter may project potentially unsafe control inputs onto the space of safe actions, ensuring that the system's state remains within the safe set. This may involve adjusting the control inputs to satisfy the condition that the HJ value function is nonnegative, thereby maintaining the safety constraints.

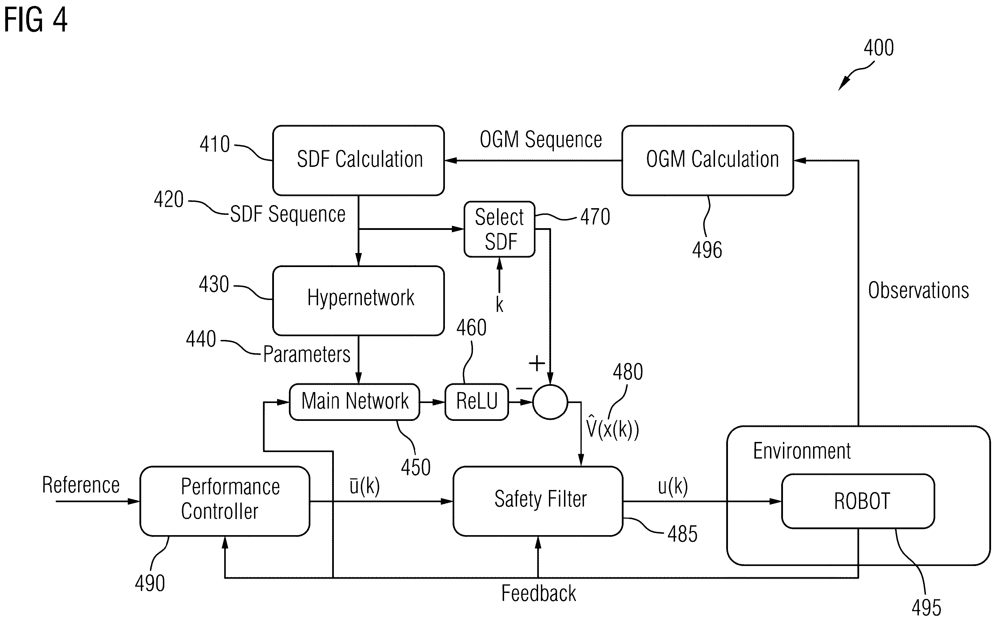

For example, consider a mobile robot 495 navigating a dynamic environment with moving obstacles, as illustrated in Fig 4. Fig. 4 shows a block diagram of an embodiment using the HJ value function within a safety filter as a control barrier function (CBF). The performance controller 490 generates control inputs to achieve a desired trajectory. However, these control inputs may lead the robot into unsafe regions. The safety filter, using the HJ value function as a CBF, modifies these control inputs to ensure that the robot's state remains within the safe set. This adjustment ensures that the robot avoids collisions and operates safely, even in the presence of dynamic changes in the environment.

By using the HJ value function as a CBF in a safety filter, the system can dynamically enforce safety constraints in real-time. This approach is applicable to a wide range of robotics applications, not limited to Model Predictive Control (MPC). It provides a robust mechanism for ensuring safe operation in complex and uncertain environments, enhancing the reliability and safety of autonomous systems.

In embodiments, the HJ value function may be used within a safety filter as a control barrier function (CBF). The benefit of this approach is that one is not restricted to a particular controller type (as with MPC above), but one can assume an arbitrary performance controller which is not capable of achieving safety constraints on its own. The role of the safety filter is to filter out potentially unsafe actions from the performance controller by projecting those actions to the space of safe actions that guarantee that the approximated value function is positive. In this case the SDF sequence can correspond to both future and past time steps.

In embodiments, wherein determining the HJ value function as a subtraction of the nonnegative residual from an SDF of the one or more SDF, and using the determined HJ value function for motion planning may comprise: determining an HJ value function as a subtraction of the nonnegative residual from an SDF, of the one or more SDF, obtained for a future time step subsequent to a current time step, and using (160) the HJ value function as a terminal constraint in a Model Predictive Control, MPC, for safe motion planning; and/or determining (160) an HJ value function (280) as a subtraction of the nonnegative residual from an SDF, of the one or more SDF, obtained for the current time step, and using (170) the HJ value function as a Control Barrier Function, CBF, in a safety filter (485) for safe motion planning.

Accordingly, the HJ value function may be used for both purposes: as a terminal constraint in Model Predictive Control (MPC) for safe motion planning and as a Control Barrier Function (CBF) in a safety filter.

One such example is a safety-critical model predictive control strategy utilizing discrete-time CBFs. This approach integrates the HJ value function into the MPC framework to ensure that the system remains within a safe set while achieving optimal performance. The HJ value function may be used as a terminal constraint in the MPC optimization problem, ensuring that the terminal state of the system lies within the safe set defined by the value function. Additionally, the HJ value function may be employed as a CBF in a safety filter to modify control inputs proposed by a performance controller, ensuring they remain within the safe set and preventing collisions.

Another example is a robot navigating through a scenario with stationary and patrolling robots, using CBFs to avoid collisions. The HJ value function is used to define the safe set, and the safety filter modifies the control inputs to ensure the robot remains within this set.

These examples illustrate how the HJ value function can be effectively used both as a terminal constraint in MPC for safe motion planning and as a CBF in a safety filter, ensuring the safety and optimal performance of autonomous systems in dynamic environments.

In embodiments, the environment representation may comprise more than one SDFs, one SDF is obtained for the current time step, and the remaining SDFs are obtained for at least one of N previous time steps before the current time step, and/or for at least one of N subsequent times steps after the current time step, where N is an integer;

The environment representation may include multiple SDFs to provide a comprehensive view of the environment over time. One SDF may be obtained for the current time step, capturing the immediate state of the environment. This SDF reflects the current positions of obstacles and other relevant features, providing a snapshot of the environment at the present moment. By incorporating this current SDF, the system can make real-time decisions based on the most up-to-date information.

Additionally, the environment representation includes SDFs for other time steps to account for the dynamic nature of the environment. These additional SDFs can be obtained for at least one of N previous time steps before the current time step, and/or for at least one of N subsequent time steps after the current time step, where N is an integer. The SDFs from previous time steps provide historical context, allowing the system to understand how the environment has evolved over time. The SDFs for future time steps, on the other hand, are predictions that help the system anticipate changes and plan accordingly. By using a sequence of SDFs, the system gains a more robust and dynamic understanding of the environment, enhancing its ability to navigate safely and efficiently.

In embodiments, using the HJ value function as a terminal constraint in the Model Predictive Control, MPC, may comprise ensuring that the terminal state of the MPC optimization problem satisfies the HJ value function, thereby constraining the terminal state to lie within the safe set defined by the value function, wherein the environment representation comprises at least one SDF obtained for time steps subsequent to a current time step.

In embodiments, using the HJ value function as a Control Barrier Function, CBF, in a safety filter may comprise: Modifying control inputs proposed by a performance controller to ensure they remain within a safe set defined by the HJ value function, wherein the safe set is the set of states for which the HJ value function is non-negative; Projecting potentially unsafe control inputs onto the space of safe actions, thereby maintaining the safety constraints defined by the HJ value function, wherein safe actions are defined as control inputs that ensure the system's state remains within the safe set, thereby maintaining the safety constraints defined by the HJ value function.

Using the HJ value function as a CBF in a safety filter involves modifying the control inputs proposed by a performance controller to ensure they remain within a safe set. The safe set may be defined by the HJ value function, where the function is non-negative. This means that the system's state must always lie within the region where the HJ value function is positive, indicating safety. The safety filter continuously monitors the control inputs generated by the performance controller and adjusts them as necessary to ensure they do not lead the system into unsafe states. By doing so, the safety filter ensures that the system operates within the predefined safe boundaries, preventing collisions and other unsafe behaviors.

Additionally, the safety filter projects potentially unsafe control inputs onto the space of safe actions. This may involve identifying control inputs that could lead the system into unsafe states and modifying them to ensure they remain within the safe set defined by the HJ value function. Safe actions are those control inputs that keep the system's state within the region where the HJ value function is non-negative. By projecting unsafe control inputs onto the space of safe actions, the safety filter maintains the safety constraints defined by the HJ value function. This approach ensures that the system can navigate safely, even in dynamic and uncertain environments, by continuously enforcing safety constraints on the control inputs.

In the present disclosure, any feature or example described in an embodiment, example, method (e.g. method 100) and/or system (e.g. 200, 300, 400), may be combined with any feature or example of another embodiment, example, and/or method, unless otherwise specified.

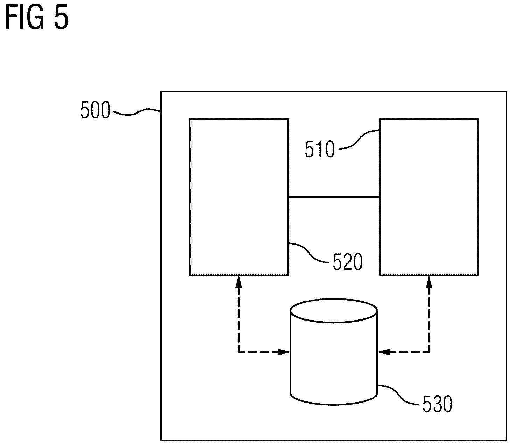

Fig. 5 schematically illustrates a block diagram of an embodiment of an apparatus 400 comprising one or more interfaces 510 for communication and one or more processors or data processing circuits 520 configured to execute any one of the methods described herein.

In embodiments, the apparatus may further comprise a memory or a storage medium 530. A storage medium 530 (or a data carrier, or a computer-readable data carrier, or a computer-readable medium) may comprise, stored thereon, a computer program or computer-executable instructions for performing one of the methods described herein when it is performed by one or more processors 520. The processors 520 may communicate with the storage medium 530 directly and/or via the one or more interfaces 510.

In embodiments, the one or more interfaces 510 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 520 may correspond to or comprise any type of programable hardware. So, examples of the data processing circuit 520, e.g., comprise a memory, microcontroller, field programmable gate arrays, one or more central and/or graphical processing units. To execute the proposed method, the data processing circuit 520 may be configured to access or retrieve an appropriate computer program for the execution of the proposed method from a memory of the data processing circuit 520 or a separate memory which is communicatively coupled to the data processing circuit 520.

Some or all of the method steps described above with regard to Figures 1-3 may be implemented by a computer in that they are executed by (or using) a processor, a microprocessor, an electronic circuit, or the data processing circuit 520. For example, the implementation can be performed using a non-transitory storage medium such as a computer-readable storage medium or data carrier. Such computer-readable media include any media that can be accessed by either a general-purpose or a specialized computer system.

Furthermore, any component of apparatus 500 may be embedded locally on the autonomous system or located in the cloud. For instance, the data processing circuit (520) can be located in an edge device of the autonomous system, in the cloud (e.g., a digital twin), or partially in both. Edge devices, equipped with edge AI capabilities, can perform real-time data processing and decision-making close to the source of data, reducing latency and improving response times. This is particularly helpful for autonomous systems that require immediate reactions to dynamic environments.

The cloud component can leverage high-performance computing (HPC) resources and advanced machine learning models for more complex computations that are not time-sensitive. By utilizing cloud-based digital twins, which are virtual replicas of physical systems, the autonomous system can simulate various scenarios and optimize its performance based on real-time data and predictive analytics. This hybrid approach ensures that the system can handle both real-time processing and complex computations efficiently.

Additionally, the integration of 5G/6G technology (e.g. in communication interfaces 510) can further enhance this setup by providing high-speed, low-latency communication between the edge devices and the cloud. This ensures seamless data transfer and synchronization, enabling the autonomous system to make informed decisions quickly and accurately.

In summary, by combining edge AI, HPC, digital twins, and 5G/6G technology, the implementation of these methods becomes more robust, scalable, and efficient. This hybrid architecture not only enhances the performance and decision-making capabilities of the autonomous system but also ensures that it can adapt to various dynamic environments and scenarios effectively.

The apparatus 500 may also include a cloud implementation, which enhances its capabilities by leveraging cloud-based resources. This cloud implementation comprises several key components. The cloud implementation may comprise cloud interfaces 510' designed for communication between the local apparatus and the cloud. These interfaces enable data transfer, remote access, and integration with cloud services, ensuring seamless connectivity.

Additionally, the cloud implementation may include cloud processors or data processing circuits 520'. These may be processing units located in the cloud, configured to execute any of the methods described for the apparatus. By utilizing cloud processors, the system can handle more complex computations and larger datasets without being limited by the local hardware's capabilities. This allows for greater flexibility and efficiency in processing tasks, as well as the ability to dynamically scale resources based on demand.

Furthermore, the cloud implementation may include a cloud memory or storage medium 530' that may be responsible for storing data, datasets, and program/method code in the cloud. Cloud storage offers scalability, redundancy, and accessibility, ensuring that data is securely stored and can be accessed from anywhere. This enhances the overall reliability and availability of the system, providing robust data protection and disaster recovery options.

The cloud implementation allows for flexibility in how the methods are executed. Specifically, any of the methods described herein can be partially executed in the cloud, where some parts of the method may be processed locally while others are offloaded to the cloud. This hybrid approach optimizes performance and resource utilization by balancing the load between local and cloud resources. Alternatively, the entire method can be fully executed in the cloud, leveraging the cloud's extensive computational power and storage capabilities. This dual implementation (local and cloud) ensures that the apparatus can efficiently handle a wide range of tasks, from simple local processing to complex cloud-based computations, providing a robust and scalable solution that can adapt to varying workloads and operational requirements.

## Claims

1. A method for safe motion planning comprising:
obtaining (110), by a hypernetwork (230), an environment representation comprising one or more signed distance fields, SDFs (220), obtained for respective one or more time steps of a motion planning time horizon;
generating (120), by the hypernetwork, parameters (240) based on the environment representation;
obtaining (130), by a main network (250), a residual of a Hamilton Jacobi, HJ, value function based on the generated parameters;
applying (140) a Rectified Linear Unit, ReLU (260), to the residual to obtain a nonnegative residual;
determining (150) an HJ value function (280) as a subtraction of the nonnegative residual from an SDF of the one or more SDF; and
using (160) the determined HJ value function for safe motion planning.

2. The method of claim 1, wherein determining the HJ value function as a subtraction of the nonnegative residual from an SDF of the one or more SDF, and using the determined HJ value function for motion planning comprise:
determining an HJ value function as a subtraction of the nonnegative residual from an SDF, of the one or more SDF, obtained for a future time step subsequent to a current time step, and using (160) the HJ value function as a terminal constraint in a Model Predictive Control, MPC, for safe motion planning; and/or
determining (160) an HJ value function (280) as a subtraction of the nonnegative residual from an SDF, of the one or more SDF, obtained for the current time step, and using (170) the HJ value function as a Control Barrier Function, CBF, in a safety filter (485) for safe motion planning.

3. The method of claim 2, wherein the future time step is a last time step in the motion planning time horizon of the Model Predictive Control, MPC.

4. The method of any previous claim, wherein the one or more SDFs are derived from respective one or more occupancy grid maps, OGMs, obtained for the respective one or more time steps.

5. The method of any previous claim, wherein when the environment representation comprises more than one SDFs, one SDF is obtained for a current time step, and the remaining SDFs are obtained for at least one of N previous time steps before the current time step, and/or for at least one of N subsequent times steps after the current time step, where N is an integer.

6. The method of any previous claim, wherein the hypernetwork or the main network is a machine learning model.

7. The method of any previous claim, wherein using the HJ value function as a terminal constraint in the MPC comprises ensuring that a terminal state of the MPC optimization problem satisfies the HJ value function, thereby constraining the terminal state to lie within a safe set defined by the value function, wherein the environment representation comprises at least one SDF obtained for time steps subsequent to a current time step.

8. The method of any previous claim, wherein using the HJ value function as CBF in a safety filter comprises modifying control inputs obtained by a performance controller to ensure that the control inputs remain within a safe set defined by the HJ value function, wherein the safe set is the set of states for which the HJ value function is non-negative.

9. The method of claim 8, wherein using the HJ value function as a CBF in a safety filter further comprises projecting potentially unsafe control inputs onto the space of safe actions, thereby maintaining the safety constraints defined by the HJ value function.

10. The method of claim 9, wherein safe actions are defined as control inputs that ensure a state of a system controlled by the motion planning remains within the safe set, thereby maintaining the safety constraints defined by the HJ value function.

11. A computer program comprising instructions which, when the computer program is executed by a computer, cause the computer to carry out a method of any one of claims 1 to 10.

12. A computer-readable data carrier having stored thereon the computer program of claim 11.

13. An apparatus (500) comprising:
one or more interfaces (510) for communication;
a memory (530); and
a data processing circuit (520) configured to carry out the method of any one of claims 1 to 10.
